# EUROPÄISCHE PATENTSCHRIFT

(11) **EP 1 192 030 B1**
(45) Veröffentlichungstag und Bekanntmachung des Hinweises auf die Patenterteilung: **28.05.2003**
(21) Anmeldenummer: 00954282.0
(22) Anmeldetag: 17.06.2000
(51) Int. Cl.: B29C 44/14

(54) **VERFAHREN ZUM HERSTELLEN VON ZUMINDEST TEILWEISE MIT SCHAUMSTOFF GEFÜLLTEN HOHLKÖRPERN AUS KUNSTSTOFF**
METHOD FOR PRODUCING PLASTIC HOLLOW BODIES WHICH ARE AT LEAST PARTIALLY FILLED WITH FOAMED MATERIAL
PROCEDE DE PRODUCTION DE CORPS CREUX EN MATIERE PLASTIQUE REMPLIS AU MOINS EN PARTIE DE MOUSSE

(30) Priorität: 06.07.1999 DE 19930903
(43) Veröffentlichungstag der Anmeldung: 03.04.2002
(73) Patentinhaber: Kautex Textron GmbH & Co. KG., 53229 Bonn (DE)
(72) Erfinder: MOITZHEIM, Jürgen, D-53639 Königswinter (DE)
(74) Vertreter: Patentanwälte Lippert, Stachow, Schmidt & Partner
(86) Internationale Anmeldenummer: DE0002009
(87) Internationale Veröffentlichungsnummer: WO01002148

(56) Entgegenhaltungen:
- EP-A- 0 512 444
- EP-A- 0 583 542
- US-A- 3 901 958

## Beschreibung

Die Erfindung betrifft ein Verfahren nach dem Oberbegriff des Anspruchs 1.

Es ist insbesondere im Zusammenhang mit der Herstellung von Teilen für die Kraftfahrzeugindustrie bekannt, Kunststoff-Hohlkörper beispielsweise im Blasverfahren herzustellen, die nachträglich mit sogenannten Kunststoff-Beads aus Schaumstoff, auch Minibeads genannt, gefüllt werden, um auf diese Weise innerhalb des Hohlkörpers eine Schaumstoff-Füllung zu bilden. Dazu wird beispielsweise auf die DE-OS 196 48 525 verwiesen.

Die bisher angewandten Verfahren zur Herstellung derartiger Kfz.-Teile sind einigermaßen umständlich, da zunächst der eigentliche Hohlkörper hergestellt wird, um ihn danach in einem gesonderten Arbeitsgang mit den Kunststoff-Beads zu füllen. Dies ist zeitaufwendig. Hinzu kommt, dass durch die mehrfache Handhabung, beispielsweise beim Herausnehmen aus der Blasform, beim Transport zu der Station, in welcher die Kunststoff-Beads in den Hohlkörper eingeführt werden, beim Einlegen in die dazu notwendige Stützform usw., die Oberfläche des Hohlkörpers häufig Beschädigungen erfährt, die, auch wenn es sich nur um Kratzer oder dgl. handelt, das Aussehen des fertigen Teiles beeinträchtigen bzw. das Aufbringen einer Lackierung oder dgl. erschweren.

Ein Verfahren gemäß Oberbegriff von Anspruch 1 ist beispielsweise auch aus der EP-A-0 512 444 bekannt. Dieses Verfahren beschreibt lediglich den Transport eines Partikelschaums in den Innenraum des Blasteils während der Stabilisierungsphase desselben. Zur Stabilisierung der Schaumfüllung ist es gegebenenfalls erforderlich, die einzelnen Schaumpartikel miteinander zu versintern. Ein ähnliches Verfahren ist beispielsweise aus der EP 0 583 542 B1 bekannt. Bei diesem Verfahren werden gealterte Kunststoff-Beads (preexpanded beads) in den Hohlraum des Blasteils eingebracht und in diesem zur Stabilisierung der Füllung miteinander versintert. Die Versinterung erfolgt mittels Heißdampfs, was mit Kondensatbildung einhergeht, die nicht akzeptabel ist.

Demzufolge liegt der Erfindung die Aufgabe zugrunde, das Verfahren der einleitend beschriebenen Art so zu modifizieren, dass die Herstellung derartiger mit Kunststoff-Beads gefüllter Teile vereinfacht wird.

Die Aufgabe wird gelöst unter Anwendung der Maßnahmen, die im Anspruch 1 angegeben sind.

Das Verfahren gemäß der Erfindung lässt sich dahingehend zusammenfassen, dass zunächst in üblicher Weise im Blasverfahren ein die äußere Gestalt des Teiles, beispielsweise eines Stoßfängers für ein Kfz. bestimmender Hohlkörper hergestellt wird, wobei nach dem Aufweitvorgang, ggf. bereits in der letzten Phase desselben beginnend, eine Vielzahl von Kunststoff-Beads aus Schaumstoff in den noch in der Blasform befindlichen Hohlkörper eingeblasen wird. Der Beginn dieses Einblasens hängt im wesentlichen von den Druckverhältnissen im Hohlkörper ab. Im allgemeinen wird es zweckmäßig sein, zunächst den Blasdruck, der innerhalb des aus dem Vorformling aufgeweiteten Hohlkörpers herrscht und z. B. 10 - 12 bar betragen kann, abzusenken, so dass die Kunststoff-Beads mit verhältnismäßig geringem Arbeitsdruck, beispielsweise 2 - 4 bar, in den Innenraum des Hohlkörpers eingeblasen werden können.

Diese kleinen Kunststoff-Beads, die vorzugsweise aus geschlossenzelligem Kunststoff bestehen, sind vorher unter Überdruck gesetzt worden, so dass sie eine merkliche Volumenverringerung erfahren haben. Der in der Blasform befindliche Hohlkörper wird möglichst vollständig mit diesen Kunststoff-Beads gefüllt, so dass nach vollständiger Druckentlastung des von dem Hohlkörper umschlossenen Innenraums die Kunststoff-Beads eine Entspannung und damit eine gewisse Ausdehnung und Volumenvergrößerung erfahren, die im allgemeinen dazu führt, dass auch noch unausgefüllte Bereiche in dem vom Hohlkörper umschlossenen Innenraum vom Schaumststoff der Kunststoff-Beads ausgefüllt werden. Die Volumenvergrößerung der Kunststoff-Beads kann dazu führen, dass der Hohlkörper auf Dauer unter einem gewissen inneren Überdruck steht. Dies stellt jedoch kein Problem dar. Vielmehr hat sich gezeigt, dass es auf die vorbeschriebene Weise möglich ist, zu einer geschlossenen, uniformen Schaumstoff-Füllung innerhalb des Hohlkörpers zu kommen, ohne dass es notwendig wäre, die Kunststoff-Beads un tereinander mittels Schweißen oder sonstwie zu verbinden. Allerdings ist es beim Verfahren gemäß der Erfindung möglich, daß die an der Wandung des Hohlkörpers anliegenden Kunststoff-Beads mit dieser verschweißen. Dies wird bei Verwendung von kompatiblen Materialien immer dann der Fall sein, wenn die Wandung des Hohlkörpers innenseitig bei Beginn des Einblasens der Kunststoff-Beads noch weichplastisch ist.

Für die Kunststoff-Beads kann praktisch jeder geeignete Kunststoff, der schäumbar ist, verwendet werden, beispielsweise auch Polyurethan. Zwecks Vereinfachung der Entsorgung ist es jedoch zweckmäßig, die Kunststoff-Beads aus einem Material herzustellen, aus dem auch der Hohlkörper besteht. Im Falle von Stoßfängern wird für den Hohlkörper häufig Polypropylen verwendet. Mithin sollten dann auch die Kunststoff-Beads zweckmäßigerweise aus Polypropylen hergestellt sein. Für die Herstellung des Hohlkörpers und der Kunststoff- Beads ist aber auch die Verwendung anderer, insbesondere thermoplastischer Kunststoffe, möglich.

Gemäß einem weiteren Vorschlag der Erfindung kann auch so vorgegangen werden, daß der Hohlkörper, der beispielsweise das Gehäuse eines Stoßfängers darstellt, in mehrere voneinander abgegrenzte Kammern unterteilt ist, die gegebenenfalls unabhängig voneinander mit dem Kunststoff-Beads gefüllt werden können. Dabei besteht die Möglichkeit, z. B. Kunststoff-Beads unterschiedlicher Größe oder in anderer Hinsicht unterschiedlichen Eigenschaften in die einzelnen gegeneinander geschlossenen Kammern einzuführen, so daß beispielsweise ein Stoßfänger entsteht, der bezüglich der Aufnahme von Stoßkräften, seiner Nachgiebigkeit usw. in bestimmten Bereichen unterschiedliche Eigenschaften aufweist.

In der Zeichnung ist im Schema eine Vorrichtung zum Herstellen von Stoßfängern als Ausführungsbeispiel dargestellt. Es zeigen:
- Fig. 1: im Schema eine Einrichtung zum Herstellen von mit Schaumstoff ausgefüllten Hohlkörpern mit geöffneter Blasform,
- Fig. 2: eine der Fig. 1 entsprechende Darstellung mit geschlossener Blasform und darin befindlichem Hohlkörper.

Die in der Zeichnung dargestellte Extrusions-Blaseinrichtung 10 ist mit einer Extrusionseinrichtung 14 versehen, die zur Herstellung von schlauchförmigen Vorformlingen 12 dient. Von der Extrusionseinrichtung sind in der Zeichnung lediglich der Extrusionskopf 16 und - stark verkleinert - zwei Extruder 18 und 20 dargestellt. Die Verwendung von zwei Extrudern gibt die Möglichkeit, einen Vorformling 12 herzustellen, dessen Wandung laminatartig aus zwei Schichten besteht, wobei die äußere Schicht beispielsweise aus einem Material bestehen kann, welches sich besser lackieren läßt als die untere Schicht, die die eigentliche Tragschicht des Vorformlings und des daraus herzustellenden Hohlkörpers bildet.

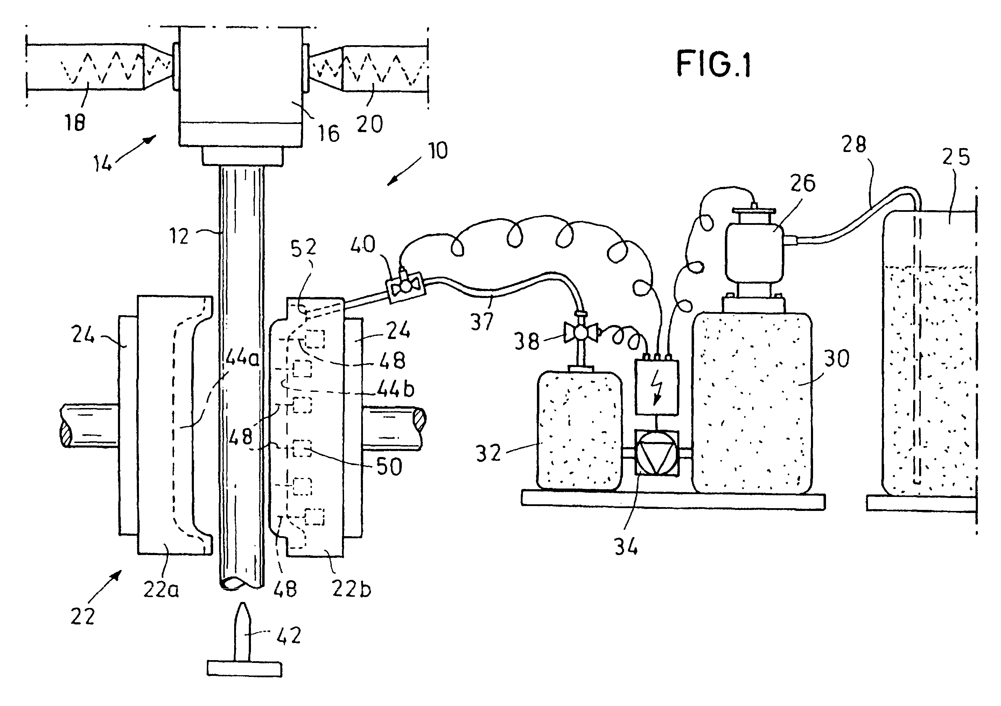

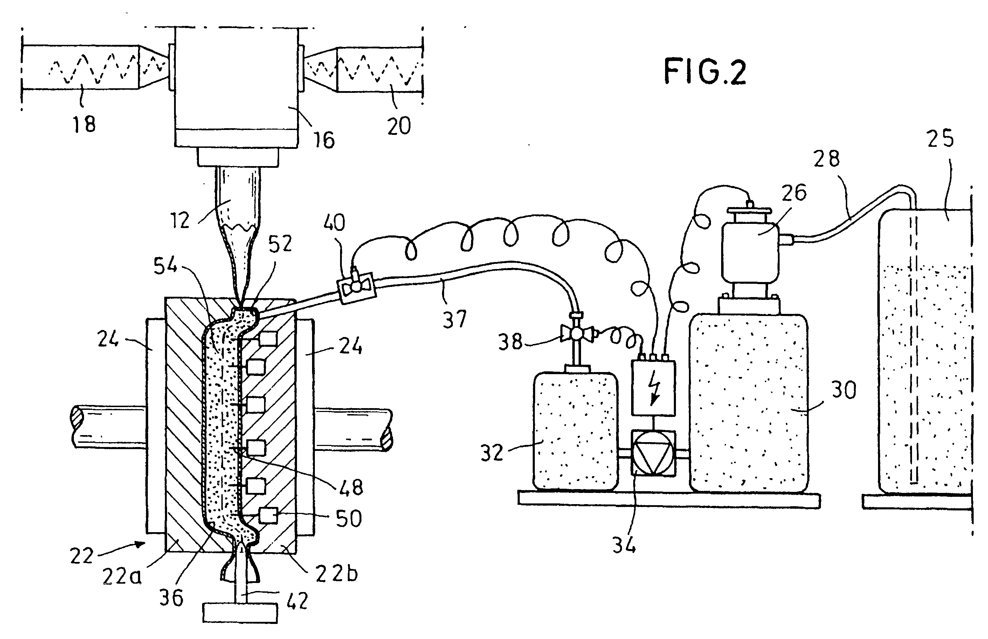

Die Blasform 22 ist zweiteilig ausgebildet und bei dem dargestellten Ausführungsbeispiel so unterhalb des Extrusionskopfes 16 angeordnet, daß sie den aus letzterem extrudiertem Vorformling 12, der frei am Extrusionskopf 16 hängt, aufnehmen kann. Dazu nehmen zunächst die beiden Formteile 22a, 22b, die in der Bildebene zwischen einer offenen Position (Fig. 1) und einer geschlossenen Position (Fig. 2) hin- und herbewegbar sind, die Positionen ein, in welcher die Blasform offen ist.

In einem Abstand von der Blasform 22, deren Teile 22a, 22b von jeweils einer Halteplatte 24 getragen sind, ist ein Vorratsbehälter 25 für Kunststoff-Beads angeordnet, aus welchem mittels einer üblichen Fördereinrichtung 26 über eine Rohrleitung 28 die Kunststoff-Beads in einen daneben befindlichen Zwischenbehälter 30 gefördert werden, der, wie der Vorratsbehälter 25, unter Normaldruck steht.

Ein Druckbehälter 32 ist über eine Pumpe 34 mit dem Zwischenbehälter 30 verbunden. Die Pumpe 34 fördert die Kunststoff-Beads aus dem Zwischenbehälter 30 in den Druckbehälter 32, wobei sie gleichzeitig in letzterem einen Überdruck aufbaut, der beispielsweise 2 bar betragen kann und in jedem Fall größer sein muß als der Druck, der im inneren der Blasform bzw. in dem in letzterer befindlichen Hohlkörper 36 (Fig. 2) herrscht, der innerhalb der Blasform durch Aufweiten des Vorformlings 12 entsteht. An den Druckbehälter 32 ist eine Rohr- oder Schlauchleitung 37 angeschlossen, die mit zwei Ventilen 38, 40 versehen ist. Die Schlauchleitung 37 endet innerhalb des Blasformteils 22b und ist an diesem Ende 52 so ausgebildet, daß der Innenraum des aus dem Vorformling 12 herzustellenden Hohlkörpers 36 mit der Leitung 37 und damit dem Druckbehälter 32 verbunden werden kann.

Wenn der Vorformling 12 die in Fig. 1 dargestellte für die Herstellung eines Hohlkörpers 36 erforderliche Länge aufweist, wird die Blasform 22 geschlossen, nachdem zuvor eine Blasdüse 42 aus der Position gemäß Fig. 1 in die gemäß Fig. 2 bewegt worden ist, in welcher die Blasdüse 42, die als Blasdorn ausgebildet sein kann, in das untere offene Ende des Vorformlings 12 hineinragt. Nach dem Schließen der Blasform durch Bewegen der Formteile 22a, 22b in die Position gemäß Fig. 2 wird der Vorformling 12 durch Einführen von Blasluft durch den Blasdorn 42 in den Vorformling hinein aufgeweitet, wobei die Gestalt des dabei entstehenden Hohlkörpers 36 durch die Kontur des Formnestes bestimmt wird, welches sich aus den beiden Formnestabschnitten 44a, 44b in den Formteilen 22a bzw. 22b zusammensetzt. Das Einführen von Blasluft 42 kann unter Umständen bereits während des Schließens der Blasform 22 geschehen. Dabei handelt es sich jedoch um Vorgänge, die jedem Fachmann auf dem Gebiet der Blasformtechnik geläufig sind. Entsprechendes gilt auch für die Extrusionstechnik zur Herstellung des Vorformlings 12.

Die Formhälfte 22b ist mit entlang der vertikalen Erstreckung des Formnestes 44a, 44b und somit entlang dem sich darin befindlichen Hohlkörper 36 mit Hohlnadeln 48 versehen, die, wie insbesondere Fig. 1 erkennen läßt, über die Begrenzung des Formnestes 44b in dieses hineinragen, so daß spätestens beim Aufweiten des Vorformlings 12 dessen Wandung von den Hohlnadeln 48 durchstochen wird. Jede Hohlnadel 48 ist unter Zwischenschaltung eines Ventils 50 mit einer nicht dargestellten Unterdruckquelle verbunden.

Schließlich kann auch das Ende der Leitung 37 im Formteil 22b mit einer Hohlnadel oder dgl. versehen sein, die dazu führt, daß beim Aufweiten des Vorformlings 12 das Ende 52 der Leitung 37 die Wand des Vorformlings 12 bzw. des sich daraus beim Aufweiten bildenden Hohlkörpers 36 durchstößt, so daß die Leitung 37 in Abhängigkeit von der Stellung der Ventile 38, 40 mit dem vom Hohlkörper 36 umschlossenen Innenraum 54 in Verbindung steht. Selbstverständlich kann die Herstellung der Verbindung zwischen Leitung 37 und Innenraum 54 des Hohlkörpers 36 auch auf andere Weise hergestellt werden, z. B. durch einen durch die Leitung 37 gegen die Wandung des noch warmplastischen Hohlkörpers 36 zur Einwirkung gebrachten Luftstoßes, welcher die Wandung dese Hohlkörpers an dieser Stelle perforiert. Wie im einzelnen die Öffnung in der Wandung des Hohlkörpers 36 hergestellt wird, ist für die Erfindung nicht von entscheidender Bedeutung, da es lediglich darauf ankommt, mittels der Leitung 37 eine Verbindung zwischen dem Druckbbehälter 32 einerseits und dem Innenraum 54 des in der Blasform 22 befindlichen Hohlkörpers andererseits herzustellen.

Im einzelnen wird so vorgegangen, daß nach dem Schließen der Blasform der Vorformling 12 seine Aufweitung zum Hohlkörper 36 erfährt. Sobald der Aufweitvorgang abgeschlossen ist oder kurz danach wird der Druck im Innenraum 54 des Hohlkörpers 36, der während des Aufweitvorganges, beispielsweise 10 bar betragen kann, reduziert. Dies kann über die Blasdüse 42 oder eine daran vorgesehene Entlüftungsöffnung, ggf. aber auch über die Hohlnadeln 48 erfolgen, deren Ventile 50 während des Aufweitvorganges geschlossen sind. Das Ausmaß, um welches der Innendruck im Hohlkörper 36 abgesenkt wird, hängt im wesentlichen ab von dem Druck, mit welchem die Kunststoff-Beads aus dem Druckbehälter 32 in den Innenraum 54 transportiert werden. In jedem Fall muß der Druck im Druckbehälter 22 größer sein, wobei mit zunehmendem Druckunterschied zwischen dem Druck im Druckbehälter 32 und dem im Innenraum 54 des Hohlkörpers 36 sich auch die Geschwindigkeit erhöht, mit welcher die Kunststoff-Beads in den Innenraum 54 transportiert werden. Allerdings stellt dieser Transport ohnehin kein großes Problem dar, da die Kunststoff-Beads einerseits sehr klein und damit entsprechend leicht sind. Sie weisen normalerweise einen Durchmesser auf, der einige mm beträgt. Andererseits muß der Druck im Innenraum 54 des Hohlkörpers und damit in der Blasform 22 ohnehin hoch genug sein, um zu erreichen, daß die Kunststoff-Beads eine gewisse Komprimierung unter Verringerung des Volumens erfahren, welches sie bei Normaldruck aufweisen.

In der Praxis hat sich gezeigt, daß ein Absenken des Druckes im Innenraum des in der Blasform 22 befindlichen Objektes auf etwa 1 bar Überdruck im allgemeinen ausreicht, um nach erfolgtem Aufweiten zu gewährleisten, daß der Hohlkörper 36, wenn er noch nicht soweit verfestigt ist, daß er formsteif wäre, seine dem Formnest 44a, 44b entsprechenden Gestalt beibehält, in welcher er in Anlage an der Wandung des Formnestes ist. wenn dann unter einem Überdruck von z. B. 2 bar die Kunststoff-Beads durch die Leitung 37 in den Innenraum 54 strömen, ist es lediglich erforderlich, zumindest einige der den Hohlnadeln 48 zugeordneten Ventile 50 zu öffnen, um ein Druckgefälle zwischen dem Druckbehälter 32 einerseits und dem Innenraum 54 andererseits aufrechtzuerhalten. Dabei besteht die Möglichkeit, durch eine bestimmte Auswahl der zu öffnenden Hohlnadeln das Füllen des Innenraumes 54 mit den Kunststoff-Beads zu steuern derart, daß beispielsweise zu Beginn des Füllvorganges nur die untere Hohlnadel oder die beiden unteren Hohlnadeln geöffnet werden, so daß dadurch eine Strömung entsteht, durch welche die Kunststoff-Beads in den unteren Bereich des Hohl-raums transportiert werden. Mit ansteigendem Füllungsgrad können dann auch nacheinander die Ventile der darüber befindlichen Hohlnadeln geöffnet werden, und zwar ebenfalls mit zunehmendem Füllungsgrad von unten nach oben, wobei ggf. die weiter unten befindlichen Ventile 50 wieder geschlossen werden. Dies hängt im einzelnen von den jeweiligen Gegebenheiten, auch dem Strömungswiderstand der bereits im Innenraum 54 befindlichen Füllung aus Kunststoff-Beads ab, da eine Verfahrensführung vorteilhaft ist, bei welcher bis zum Ende des Füllvorganges ein Überdruck innerhalb des Objektes 36 aufrechterhalten bleibt, der ausreicht, die Kunststoff-Beads in einem komprimierten Zustand zu halten, so daß nach Beendigung des Füllvorganges und Herstellen des Druckausgleiches zwischen Innenraum 54 und der äußeren Umgebung die Kunststoff-Beads innerhalb kurzer Zeit expandieren. Dies ist im wesentlichen darauf zurückzuführen, daß die in den Zellen der Kunststoff-Beads eingeschlossene Luft, die vorher unter der Einwirkung des Überdruckes etwas komprimiert war, sich entspannt und somit die Kunststoff-Beads expandiert.

Das vorstehend beschriebene Verfahren, bei welchem die Kunststoff-Beads zunächst komprimiert und alsdann mittels Druckdifferenz in den in der Blasform befindlichen Hohlkörper 36 transportiert werden, worauf ein Druckausgleich erfolgt, der zu einer Volumenvergrößerung der Kunststoff-Beads führt, kann bei Raumtemperatur ablaufen, wenngleich davon auszugehen ist, daß im Normalfall zu Beginn des Füllvorganges in der Blasform und somit auch im Innenraum des Hohlkörpers 36 eine Temperatur herrscht, die beispielsweise 50 bis 80° C betragen kann. Jedoch wird, wenn keine besonderen Maßnahmen getroffen werden, aufgrund der normalerweise erfolgenden Kühlung der Blasform mit dem ziel, die Wandung des Hohlkörpers 36 zu Kühlen und dadurch zu verfestigen, ohnehin eine schnelle Temperatursenkung erfolgen. Die Förderluft, mittels welcher die Kunststoff-Beads durch die Leitung 37 in den Hohlkörper 36 gefördert werden, wird normalerweise auch eine Temperatur haben, die nicht wesentlich über der Raumtemperatur liegt, so daß hier ein zusätzlicher Kühleffekt eintritt.

Die innerhalb des Hohlkörpers 36 befindliche Füllung erfährt durch die Volumenzunahme der einzelnen Kunststoff-Beads nach Herbeiführung des vollständigen Druckausgleiches eine Verfestigung, die zu einem einheitlichen Schaumgefüge führt, dessen einzelne Partikel jedoch durchweg nicht miteinander verbunden sind. Dies ist jedoch ohne Nachteil, da der geblasene Hohlkörper 36 das sich aus der Füllung bildende dichte Schaumgefüge in der gewünschten Form hält.

Es kann nicht ausgeschlossen werden, daß auch nach Druckausgleich die Wandung des Hohlkörpers 36 unter einem gewissen inneren Überdruck steht. Dies kann dann der Fall sein, wenn der nach dem Füllvorgang innerhalb des Hohlkörpers 36 verbleibende freie Raum kleiner ist als der Raum, der bei vollständiger Entspannung der Kunststoff-Beads für die dadurch bewirkte Volumenvergrößerung beansprucht wird. Der am Ende des Füllvorganges bei noch aufrechterhaltenem Überdruck vorhandene freie Raum wird sich zusammensetzen aus einer Vielzahl sehr kleiner Zwischenräume zwischen den Kunststoff-Beads und möglicherweise einem zusammenhängenden Freiraum am oberen Ende des Hohlkörpers 36, also dem Bereich nahe der Mündung der Leitung 37 in den Innenraum 54 hinein. Durch die Wahl der Größe dieses am Ende des Füllvorganges im oberen Bereich noch verbleibenden Freiraumes kann auch die danach erfolgende Volumenvergrößerung der Masse der Kunststoff-Beads gesteuert werden insoweit, als beispielsweise der Füllvorgang dann abgeschlossen wird, wenn der noch vorhandene Freiraum ausreicht, um eine im wesentlichen vollständige Entspannung mit entsprechender Volumenvergrößerung sämtlicher innerhalb des Hohlkörpers 36 befindlicher Kunststoff-Beads zu bewirken.

Im übrigen besteht die Möglichkeit, den Hohlkörper 36 auch in einzelne Kammern oder Abschnitte zu unterteilen, die jeweils für sich, ggf. mit unterschiedlichen Kunststoff-Beads gefüllt werden, wobei auch unterschiedliche Mengen an Kunststoff-Beads pro Volumeneinheit in die einzelnen Kammern eingefüllt werden können, um so in Abhängigkeit von unterschiedlichen Volumenvergrößerungen bzw. verbleibenden Restspannungen in den Kunststoff-Beads am Stoßfänger - oder einem anderen Teil - Bereiche mit unterschiedlichen Dichten und somit Härten entstehen zu lassen.

In jedem Fall stellt die Blasform 22 auch die Stützform für den Hohlkörper 36 für den Verfahrensabschnitt, in welchem der jeweilige Hohlkörper mit dem Kunststoff-Beads gefüllt wird. Ein wesentlicher Vorteil der Erfindung besteht darin, daß, abgesehen von einigen geringfügigen Modifizierungen, beispielsweise der Anbringung des Endes der Leitung 37 am Blasformteil 22b und der Anbringung der Hohlnadeln 48 an diesem Blasformteil, eine übliche Blasform verwendet werden kann, die zu ihrer üblichen Funktion noch eine Zusatzfunktion erfüllt, wobei der für das Füllen des Hohlkörpers 36 mit den Kunststoff-Beads erforderliche zusätzliche Zeitaufwand nicht sehr groß zu sein braucht, so daß der Arbeitszyklus zur Herstellung eines Erzeugnisses in der Blasform sich nicht wesentlich verlängert. Dabei spielt selbstverständlich auch die bereits erwähnte Tatsache eine Rolle, daß der Füllvorgang unmittelbar nach Beendigung des Aufweitens des Vorformlings 12 in der Blasform beginnen kann, so daß zumindest ein wesentlicher Abschnitt des Füllvorganges in der ohnehin notwendigen Kühlphase durchgeführt werden kann, während welcher der aufgeweitete Vorformling noch in der Blasform verbleiben muß, um die erforderliche Verfestigung zu erfahren.

## Patentansprüche

1. Verfahren zum Herstellen von Hohlkörpern (36) aus Kunststoff, die zumindest teilweise mit Schaumstoff gefüllt sind, wobei zunächst ein Vorformling (12) in einer Blasform (22) durch inneren Überdruck zu einem Hohlkörper (36) aufgeweitet wird, der dann mit Kunststoff-Beads aus geschäumtem Kunststoff zumindest teilweise ausgefüllt wird, und die Kunststoff-Beads innerhalb des Hohlkörpers eine Volumenvergrößerung erfahren, **dadurch gekennzeichnet, dass** die Kunststoff-Beads in einem Druckbehälter (32) so unter Überdruck gesetzt werden, dass sie eine merkliche Volumenverringerung erfahren, dass die komprimierten Kunststoff-Beads in den noch innerhalb der Blasform (22) befindlichen aufgeweiteten Hohlkörper (36) unter einem Druck, der größer ist als der im Hohlkörper herrschende Druck, in diesen eingeführt werden und dass die im Hohlkörper befindlichen Kunststoff-Beads eine Druckentlastung erfahren, die zu einer Volumenvergrößerung der Kunststoff-Beads führt, die eine möglichst vollständige Ausfüllung des wenigstens einen abgegrenzten Teilvolumens des Hohlkörpers mit einem Kunststoffschaum bewirkt und dass die einzelnen Kunststoff-Beads nicht miteinander verbunden werden.

2. Verfahren nach Anspruch 1, **dadurch gekennzeichnet, dass** der Druck im Hohlkörper (36) während des Einführens der Kunststoff-Beads niedriger ist als der Druck, mit welchem der Vorformling (12) zum Hohlkörper (36) aufgeweitet wird.

3. Verfahren nach Anspruch 1, **dadurch gekennzeichnet, dass** zumindest zu Beginn der Phase, während welcher die Kunststoff-Beads in den Hohlkörper (36) eingeführt werden, letzterer noch zumindest an seiner inneren Wandfläche warmplastisch ist.

4. Verfahren nach Anspruch 1, **dadurch gekennzeichnet, dass** das Einführen der Kunststoff-Beads in den in der Blasform (22) befindlichen Hohlkörper (36) sich zumindest teilweise überschneidet mit der Kühlphase, während welcher der aufgeweitete Hohlkörper (36) in der Blasform (22) verbleibt, um eine ausreichende Verfestigung zu erreichen.

## Claims

1. A process for producing hollow bodies (36) of plastic material which are at least partially filled with foam, wherein firstly a preform (12) is expanded in a blow molding mold (22) by an increased internal pressure to form a hollow body (36), which is then at least partially filled with plastic beads of foamed plastic and the plastic beads within the hollow body experience an increase in volume, **characterized in that** the plastic beads are put under an increased pressure in a pressure container (32) in such a way that they experience a marked reduction in volume, the compressed plastic beads are introduced into the expanded hollow body (36) while still within the blow molding mold (22) under a pressure which is greater than the pressure obtaining in the hollow body and the plastic beads disposed in the hollow body experience a relief of pressure which results in an increase in the volume of the plastic beads which provides for as complete filling as possible with a plastic foam of the at least one delimited partial volume of the hollow body and the individual plastic beads are not joined together.

2. A process according to claim 1 **characterized in that** the pressure in the hollow body (36) during introduction of the plastic beads is lower than the pressure with which the preform (12) is expanded to form the hollow body (36).

3. A process according to claim 1 **characterized in that** at least at the beginning of the phase during which the plastic beads are introduced into the hollow body (36) the hollow body is still in a hot plastic condition at least at its internal wall surface.

4. A process according to claim 1 **characterized in that** the step of introducing the plastic beads into the hollow body (36) in the blow molding mold (22) at least partially overlaps with the cooling phase, during which the expanded hollow body (36) remains in the blow molding mold (22) in order to achieve sufficient hardening thereof.

## Revendications

1. Procédé de production de corps creux (36) en matière plastique qui sont au moins en partie remplis de mousse, moyennant quoi une préforme (12) est d'abord étirée dans un moule de soufflage (22) par une surpression interne en un corps creux (36) qui est ensuite rempli au moins en partie par des billes de plastique en plastique expansé, et les billes de plastique subissent une augmentation de volume à l'intérieur du corps creux, **caractérisé en ce que** les billes de plastique sont placées en surpression dans un réservoir sous pression (32), de telle sorte qu'elles subissent une diminution de volume sensible, que les billes de plastique comprimées soient introduites dans le corps creux étiré (36) se trouvant encore dans le moule de soufflage (22) sous une pression qui est plus grande que la pression régnant dans le corps creux, et que les billes de plastique se trouvant dans le corps creux subissent un allègement de pression qui conduit à une augmentation de volume des billes de plastique, ce qui provoque un remplissage le plus complet possible d'au moins un volume partiel délimité du corps creux avec une mousse de matière plastique et que les billes de plastique individuelles ne soient pas reliées entre elles.

2. Procédé selon la revendication 1, **caractérisé en ce que** la pression dans le corps creux (36) lors de l'introduction des billes de plastique est inférieure à la pression avec laquelle la préforme (12) est étirée en corps creux (36).

3. Procédé selon la revendication 1, **caractérisé en ce que**, au moins au début de la phase durant laquelle les billes de plastique sont introduites dans le corps creux (36), ce dernier est encore au moins thermoplastique sur sa paroi interne.

4. Procédé selon la revendication 1, **caractérisé en ce que** l'introduction des billes de plastique dans le corps creux (36) se trouvant dans le moule de soufflage (22), coïncide au moins en partie avec la phase de refroidissement durant laquelle le corps creux (36) étiré reste dans le moule (22) pour obtenir une solidification suffisante.
